# EUROPEAN PATENT SPECIFICATION

(11) **EP 2 898 237 B1**
(45) Date of publication and mention of the grant of the patent: **23.11.2016**
(21) Application number: 13783703.5
(22) Date of filing: 16.09.2013
(51) Int. Cl.: F16J 1/02, C23C 16/26, C23C 14/06, F16J 9/26

(54) **PISTON RING, PISTON COMPRISING SUCH RING AND PISTON MACHINE COMPRISING AT LEAST ONE SUCH PISTON**
KOLBENRING, KOLBEN MIT EINEM SOLCHEN RING UND KOLBENMASCHINE MIT MINDESTENS EINEM SOLCHEN KOLBEN
SEGMENT DE PISTON, PISTON COMPRENANT UN TEL SEGMENT ET MACHINE À PISTONS COMPRENANT AU MOINS UN TEL PISTON

(30) Priority: 21.09.2012 SI 201200287; 10.09.2013 SI 201300259
(43) Date of publication of application: 29.07.2015
(73) Proprietor: UNIVERZA V LJUBLJANI, FAKULTETA ZA STROJNISTVO, 1000 Ljubljana (SI)
(72) Inventor: KALIN, Mitjan, 1358 Log pri Brezovici (SI)
(74) Representative: Borstar, Dusan
(86) International application number: PCT/SI2013/000053
(87) International publication number: WO 2014/046627

(56) References cited:
- EP-A1- 2 385 152
- EP-A2- 1 479 946

## Description

The invention belongs to mechanical engineering, namely to piston machines or pumps including parts thereof, wherein said machines can either be driving machines like e.g. internal combustion engines powered by gasoline or diesel fuel and comprising with one or more cylinders, or also driven machines like e.g. compressors or pumps. The invention is particularly focused to working cylinders and pistons together with corresponding piston rings, which belong to such machines. On the other hand, the invention can also belong to the field of treatment of surfaces and coating metallic machine parts either by means of plasma, vacuum evaporation, ion implantation or similar methods.

The purpose of the invention is on the one hand to provide a required lubrication between each mutually engaged surfaces on each piston ring and/or each piston and on the internal wall of a liner in each corresponding cylinder of a piston machine comprising at least one working cylinder as well as at least one piston furnished with at least one piston ring and inserted within said cylinder with the possibility of reciprocal oscillating to and fro in the axial direction of said cylinder, and on the other hand to reduce losses resulting from friction or other influences within the area between each correspondingly engaged surfaces on piston rings and/or a piston and on the internal wall of said cylinder liner.

Piston machines are known, which are either used as motors, in particular internal combustion engines, or working machines like piston compressors, pumps or the like.

At least one cylinder is foreseen in such piston machines, into which at least one piston is inserted, which is oscillatory movable to and fro in the axial direction of the previously mentioned cylinder. For the purposes of achieving each desired pressure or vacuum within said cylinder, the piston is sealed within said cylinder against the inner surface of the cylinder wall by means of at least one piston ring, in internal combustion engines preferably by means of three piston rings, wherein each piston ring is capable to ensure sealing against the inner surface of the cylinder, and wherein the piston rings are also adapted to distribute a lubricant along the inner surface of the cylinder. When the piston machine is in operation, during each stroke in one or another direction, the velocity of the piston relative to the inner wall of the cylinder wall is continuously changed, and is in the starting point and the end point equal zero, whilst in the intermediate area during the first stage the velocity is increasing up to its maximal value, upon which it is decreased towards the zero. Although appropriate lubricant layer is available between the piston ring and the inner wall of the cylinder, in the area of said starting point and said end point, and also in the adjacency of these points, the so-called oil wedge cannot be established due to small velocity, and consequently, a desired efficient lubrication between the highest picks of the microscopic structure on the cylinder wall and also on the periphery of the piston ring cannot be achieved by such small velocities. As a result, essential friction occurs between these surfaces, which are therefore exposed to essential wearing. In order to reduce as much as possible said friction and the risk of wearing due to previously described conditions in connection with movements of the piston in the area of small velocity, the so-called DLC (DLC is abbreviation for "Diamond Like Carbon") coatings were applied on the surface of the piston tings, namely coatings, which are known to those skilled in the art as surface layers consisting of amorphous carbon or hydrogenated carbon in the form of a thin layer, the thickness of which is several micrometers, see e.g. J. Robertson, Material Science and Engineering 37, 2002) or e.g. EP 1 039 990 B1; EP 1479 946.

Use of such coatings on piston rings is described in DE 202011105754, JP 2012127001, CN 201818384 U or EP 2 464 761. Each used DLC-coating contains chains consisting of numerous carbon atoms, to which hydrogen atoms are bound, but some of them arc substituted either with non-metallic atoms like nitrogen, or with metallic atoms, in the field of piston rings usually with tungsten. Such coatings may definitively lead to reduction of a friction coefficient at small relative velocities between the piston ring and the inner wall of the cylinder, in particular in conditions of dry or mixed friction, while the lubricating properties in such conditions cannot assure a required functionality of the lubricant in the sense of essential reduction of the friction and co-related wearing.

The previously mentioned problem related to friction between the piston ring and the inner surface of the cylinder however does not occur just in the starting point and the end point of oscillating the piston, or adjacent to these points, i.e. in the area of small velocity of the piston, since the majority of losses lowering the efficiency of the piston machine is actually generated in the intermediate area at maximal velocity. In said intermediate area, either between the piston rings and the cylinder wall, or between the peripheral surface of the piston and the inner wall of the cylinder, there is a lubricant layer, which is on the one hand viscous and should generally be able to generate sufficient adhesiveness against the material on the surface of the cylinder and/or of the piston and/or of each piston ring. However, said viscosity and in particular also adhesiveness of the lubricant at relatively high velocities of the piston relative to the inner surface of the cylinder generate an essential resistance against displacement of the piston and consequently also essential losses and decreasing if efficiency of the piston machine. Regardless to using DLC-coatings, which can optionally be modified in accordance with one of previously described approaches, no significant influence to reduction of resistance or losses or efficiency in the area of high velocities of the piston can be achieved, so that the problem of reducing the losses remains merely unsolved despite to using the known DLC-coatings.

Namely, the friction in specific high-speed conditions merely depends on viscosity of the lubricant, which depend on adhesiveness between the lubricant and corresponding contact surface. Different DLC-coatings assure slightly different adhesiveness because their surface energy is different. Distribution of the lubricant along the contact surface is determined by the surface energy on the surfacc of the DLC-coating and with the surface tension of the lubricant. Said properties determine intensity of friction in high-speed hydrodynamic lubricating conditions. Those skilled in the art are aware that appropriate distribution is achieved not only by sufficiently low surface energy, e.g. lower than 20 mJ/m², but in particular by sufficiently low polar component of said surface energy.

Consequently, the aim of the invention is to provide such DLC-coating, which should assure sufficiently low polar component of the surface energy, which should be e.g. lower than 1,20 mJ/m², in particular lower than 0,8 mJ/m². In such manner, extremely low friction could be achieved by using classic lubricants, which are commonly used in various mechanic assemblies like engines, gearboxes, roller bearings and sliding bearings, pumps, hydraulic systems, turbines as well as in sub-assemblies thereof, like e.g. a piston ring which is used for sealing the gap between a piston and a cylinder.

The proposed invention among others refers to a piston ring of a piston for a piston machine, wherein such ring consists of appropriately resilient, hard and against wearing and optionally against thermal influences resistant metallic base material, in particular of steel, and further comprises a peripheral surface, which is suitable for sealing the piston against the inner surface of a cylinder and to which either directly or via an intermediate layer a DLC-coating is applied (*as known to those skilled in the art, DLC is abbreviation to Diamond Like Carbon).*

The invention proposes that the DLC-coating contains between 5 and 25%, in particular between 5 and 20 % fluorine with respect to the total weight of said coating.

An object of the invention is further a piston for a piston machine, said piston is under a sufficient clearance insertable into a cylinder of a piston machine and is on its peripheral surface furnished with at least one groove, which extends along the complete circumference of said piston and into which a piston ring is inserted, which is suitable for sealing of the piston against the internal surface of the cylinder of each piston machine.

In accordance with the invention, said piston comprises at least one piston ring, which consists of appropriately resilient, hard and against wearing and optionally against thermal influences resistant metallic base material, in particular of steel, and further comprises a peripheral surface, which is suitable for sealing the piston against the inner surface of a cylinder and to which either directly or via an intermediate layer a DLC-coating is applied, wherein due to reduction of the polar component of the surface energy the DLC-coating contains between 5 and 25%, in particular between 5 and 20 % fluorine with respect to the total weight of said coating.

The invention provides also a further embodiment of the piston for a piston machine, which is also under a sufficient clearance insertable into a cylinder of a piston machine and is on its peripheral surface furnished with at least one groove, which extends along the complete circumference of said piston and into which a piston ring is inserted, which is suitable for sealing of the piston against the internal surface of the cylinder of each piston machine.

According to the invention, said embodiment is characterized in that said piston is furnished with a DLC-coating, which contains between 5 and 25%, in particular 5 - 20 % of fluorine with respect to the total weight of said coating and is available on at least the part of an area of its peripheral surface, which is faced towards the internal wall of the cylinder and located outside of the grooves, which are intended to receive each piston rings.

Also a combination of the lastly mentioned embodiment of the piston and the previously mentioned embodiment of the piston is foreseen, in which the piston, in addition to said DLC-coating in the area of at least a part of its peripheral surface i.e. skirt also comprises a piston ring consisting of appropriately resilient, hard and against wearing and optionally against thermal influences resistant metallic base material, in particular of steel, and further comprises a peripheral surface, which is suitable for sealing the piston against the inner surface of a cylinder and to which either directly or via an intermediate layer a DLC-coating is applied, wherein the DLC-coating contains between 5 and 25%, in particular between 5 and 20 % fluorine with respect to the total weight of said coating.

The invention further provides an piston machine, comprising at least one cylinder, in which at least one piston in accordance with previously mentioned embodiments and features is inserted, said piston comprising at least one piston ring with previously mentioned features. Such piston machine is either a driving piston machine, which is selected from the group consisting of gasoline internal combustion engines with one or more cylinders, dicsel internal combustion engines with one or more cylinders, and internal combustion engines with one or more cylinders, in which any other fossil fuel or synthetic fuel on the basis of hydrocarbons is used, or also a driven piston machine, which is selected from the group consisting of piston pumps and piston compressors.

The invention will be described on the basis of an embodiment, which is schematically presented in the attached drawings, where
- Fig. 1: is a schematically presented piston, which is furnished with piston rings and inserted into a cylinder of a piston machine; and
- Fig.2: presents a detail A according to Fig. 1, namely a detailed view of a radial cross-section of a piston ring.

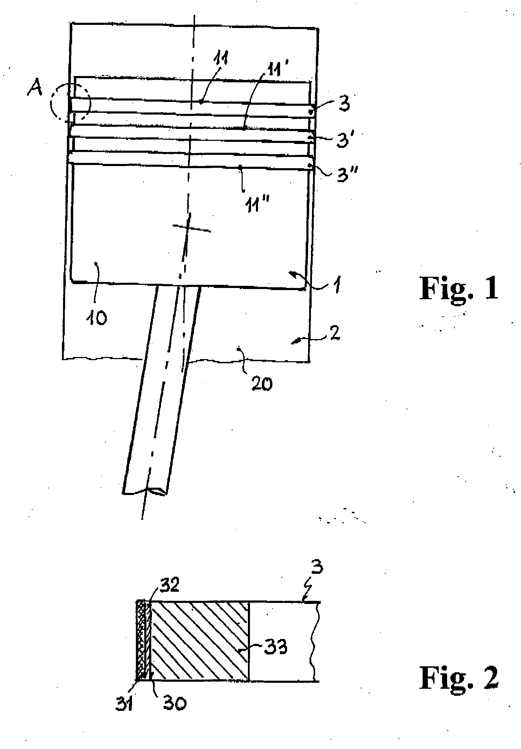

As already mentioned, the invention refers to a piston machine, which comprises at least one piston 1, which is inserted within a cylinder 2 of the piston machine (Fig. 1) and is moreover furnished with at least one piston ring 3 comprising a peripheral surface 30 adapted for tightly abutting the inner surface of the cylinder 2.

Such piston machine is generally either a piston engine intended to generate mechanical work i.e. power, or also a driven piston machine, which can be powered by means of other suitable motor. Such piston machine can further be a gasoline or diesel internal combustion engine with one or more cylinders, or also a piston machine, in which any other fuel, either a fossil fuel or a synthetic fuel on the basis of hydrocarbons, can be used for the purposes of generating work or power. On the other hand, the piston engine can also be a pump or compressor, which can be driven by means of electric motor or any other suitable means, and in which at least one piston is inserted within the cylinder in order to produce compression or vacuum in each used working media.

In order to ensure operational capability of such piston machine, appropriate sealing must be established between the piston 1 and the internal surface of the wall 20 of the cylinder 2, so that the piston 1 is furnished with at least one piston ring 3. In the shown embodiment, three piston rings 3, 3', 3" are foreseen, which are each per se inserted within corresponding grooves 11, 11', 11" and arranged on the peripheral surface 10 of the piston 1, which is also known to those skilled in the art as a piston skirt.

Similarly like the other usual piston rings, each piston ring 3 (Fig. 2) consists of a sufficiently resilient and hard metallic material 33, in particular of steel, which is appropriately resistant against wearing and optionally also against thennal influences, and which is moreover furnished with a DLC-coating 31 arranged on its outer peripheral surface 30, wherein in accordance with the invention said DLC-coating is a modified one, on which the hydrogen atoms, which are usually bound to carbon atoms, are at least partially substituted with fluorine atoms, and such DLC-coating then contains at least 5 - 25%, in particular 5 - 20% of fluorine (F).

When desired, an intermediate layer 32 is integrated between the metallic material 33 and the surface coating 31 of the piston ring 3, 3', 3", and is intended to establish a firmly interconnection between the base material 33 of the piston ring 3, 3', 3" and the DLC-coating 31.

The presence of said DLC-coating 31 with the previously defined content of fluorine on the peripheral surface 30 of the piston ring 3, 3', 3" leads to essential decreasing of adhesiveness i.e. adherence of the lubricant, which is present on the inner surface of the wall 20 of the cylinder 2, against the previously mentioned DLC-coating 31 on each disposable piston ring 3, 3', 3", which means that the resistance of the lubricant against displacing the piston 1 along the surface of the internal wall 20 of the cylinder 2 is essentially reduced. This is particularly efficient at maximum velocities of the piston 1, where also the losses were the highest.

The invention moreover provides that in each piston machine, in which at least one such piston 1 is used, also the peripheral surface 10 i.e. a piston skirt of the piston 1 is covered with such DLC-coating, by which also a resistance against displacing the piston 1 along the inner surface 20 of the cylinder 2 can be eliminated, which would otherwise occur on the peripheral surface 10 in the area outside of said grooves 11, 11', 11" intended to receive said piston rings 3, 3', 3".

## Claims

1. Piston ring (3, 3', 3") of a piston (1) for a piston machine, wherein such ring consists of appropriately resilient, hard and against wearing and optionally against thermal influences resistant metallic base material (33), in particular of steel, and further comprises a peripheral surface (30), which is suitable for sealing the piston (1) against the inner surface (20) of a cylinder (2) and to which either directly or via an intermediate layer (32) a DLC-coating (31) is applied, **characterized in that** due to reduction of the polar component of the surface energy the DLC-coating (31) contains between 5 and 25% of fluorine with respect to the total weight of said coating (31).

2. Piston ring (3, 3', 3") according to Claim 1, wherein the content of fluorine within said DLC-coating (31) is 5 - 20 % with respect to the total weight of said coating (31).

3. Piston (1) for a piston machine, said piston is under a sufficient clearance insertable into a cylinder (2) of a piston machine and is on its peripheral surface (10) furnished with at least one groove (11, 11', 11"), which extends along the complete circumference of said piston (1) and into which a piston ring (3, 3', 3") is inserted, which is suitable for sealing of the piston (1) against the internal surface (20) of the cylinder (2) of each piston machine, **characterized in that** said piston comprises at least one piston ring (3, 3', 3") according to Claim 1 or 2.

4. Piston (1) for a piston machine, said piston is under a sufficient clearance insertable into a cylinder (2) of a piston machine and is on its peripheral surface (10) furnished with at least one groove (11, 11', 11"), which extends along the complete circumference of said piston (1) and into which a piston ring (3, 3', 3") is inserted, which is suitable for sealing of the piston (1) against the internal surface (20) of the cylinder (2) of each piston machine, **characterized in that** said piston is furnished with a DLC-coating (31), which due to reduction of the polar component of the the surface energy, contains between 5 and 25% of fluorine with respect to the total weight of said coating (31) and is available on at least the part of an area of its peripheral surface (10), which is faced towards the internal wall (20) of the cylinder (2) and located outside of the grooves (11, 11', 11"), which are intended to receive each piston rings (3, 3', 3").

5. Piston (1) according to Claim 4, wherein the content of fluorine within said DLC-coating (31) is 5 - 20 % with respect to the total weight of said coating (31).

6. Piston (1) according to Claim 4, **characterized in that** it comprises at least one piston ring (3, 3', 3") according to Claim 1 or 2.

7. Piston machine, comprising at least one cylinder (2), in which at least one piston (1) according to anyone of Claims 3 to 6 is inserted, which piston is furnished with at least one piston ring (3, 3', 3") according to Claim 1 or 2.

8. Piston machine according to Claim 7, namely a driving piston machine, which is selected from the group consisting of gasoline internal combustion engines with one or more cylinders, diesel internal combustion engines with one or more cylinders, and internal combustion engines with one or more cylinders, in which any other fossil fuel or synthetic fuel on the basis of hydrocarbons is used.

9. Piston machine according to Claim 7, namely a driven piston machine, which is selected from the group consisting of piston pumps and piston compressors.

## Patentansprüche

1. Kolbenring (3, 3', 3") eines Kolbens (1) für eine Kolbenmaschine, wobei ein solcher Ring aus einem angemessen federnden, harten und gegenüber Verschleiß und gegebenenfalls gegenüber Wärmeeinflüssen beständigen metallischen Grundmaterial (33), insbesondere aus Stahl, besteht, und ferner eine Umfangsfläche (30) aufweist, die zum Versiegeln des Kolbens (1) gegen die Innenfläche eines Zylinders (2) geeignet ist und an die entweder direkt oder über eine Zwischenschicht (32) eine DLC-Beschichtung (31) aufgebracht ist, **dadurch gekennzeichnet, dass** auf Grund der Verringerung der polaren Komponente der Oberflächenenergie die DLC-Beschichtung (31) zwischen 5 und 25 % Fluor, bezogen auf das Gesamtgewicht der Beschichtung (31), enthält.

2. Kolbenring (3, 3', 3") nach Anspruch 1, wobei der Gehalt von Fluor innerhalb der DLC-Beschichtung (31) 5 bis 20 %, bezogen auf das Gesamtgewicht der Beschichtung (31), beträgt.

3. Kolben (1) für eine Kolbenmaschine, wobei der Kolben mit einem ausreichenden Spiel in einen Zylinder (2) einer Kolbenmaschine einführbar ist und an seiner Umfangsfläche (10) mit mindestens einer Nut (11, 11', 11") versehen ist, die sich entlang des gesamten Umfangs des Kolbens (1) erstreckt und in die ein Kolbenring (3, 3', 3") eingefügt ist, der zum Versiegeln des Kolbens (1) gegen die Innenfläche (20) des Zylinders (2) jeder Kolbenmaschine geeignet ist, **dadurch gekennzeichnet, dass** der Kolben mindestens einen Kolbenring (3, 3', 3") nach Anspruch 1 oder 2 aufweist.

4. Kolben (1) für eine Kolbenmaschine, wobei der Kolben mit einem ausreichenden Spiel in einen Zylinder (2) einer Kolbenmaschine einführbar ist und an seiner Umfangsfläche (10) mit mindestens einer Nut (11, 11', 11") versehen ist, die sich entlang des gesamten Umfangs des Kolbens (1) erstreckt und in die ein Kolbenring (3, 3', 3") eingefügt ist, der zum Versiegeln des Kolbens (1) gegen die Innenfläche (20) des Zylinders (2) jeder Kolbenmaschine geeignet ist, **dadurch gekennzeichnet, dass** der Kolben mit einer DLC-Beschichtung (31) versehen ist, die auf Grund der Verringerung der polaren Komponente der Oberflächenenergie zwischen 5 und 25 % Fluor, bezogen auf das Gesamtgewicht der Beschichtung (31), enthält und auf mindestens dem Teil eines Bereichs seiner Umfangsfläche (10) vorhanden ist, der zur Innenwand (20) des Zylinders (2) weist und sich außerhalb der Nuten (11, 11', 11") befindet, die dazu gedacht sind, jeden Kolbenring (3, 3', 3") aufzunehmen.

5. Kolben (1) nach Anspruch 4, wobei der Gehalt von Fluor innerhalb der DLC-Beschichtung (31) 5 bis 20 %, bezogen auf das Gesamtgewicht der Beschichtung (31), beträgt.

6. Kolben (1) nach Anspruch 4, **dadurch gekennzeichnet, dass** er mindestens einen Kolbenring (3, 3', 3") nach Anspruch 1 oder 2 aufweist.

7. Kolbenmaschine, aufweisend mindestens einen Zylinder (2), in den mindestens ein Kolben (1) nach einem der Ansprüche 3 bis 6 eingefügt ist, wobei der Kolben mit mindestens einem Kolbenring (3, 3', 3") nach Anspruch 1 oder 2 versehen ist.

8. Kolbenmaschine nach Anspruch 7, nämlich eine Antriebskolbenmaschine, die ausgewählt ist aus der Gruppe bestehend aus Benzin-Verbrennungsmotoren mit einem oder mehr Zylindern, Diesel-Verbrennungsmotoren mit einem oder mehr Zylindern und Verbrennungsmotoren mit einem oder mehr Zylindern, in denen irgendein anderer fossiler Brennstoff oder synthetischer Brennstoff auf Basis von Kohlenwasserstoffen verwendet wird.

9. Kolbenmaschine nach Anspruch 7, nämlich eine angetriebene Kolbenmaschine, die ausgewählt ist aus der Gruppe bestehend aus Kolbenpumpen und Kolbenkompressoren.

## Revendications

1. Segment de piston (3, 3', 3") d'un piston (1) pour une machine à pistons, dans lequel ledit segment est constitué d'une matière de base (33) métallique résiliente, dure, qui résiste à l'usure et de manière facultative qui résiste aux influences thermiques, en particulier d'acier, et comprend en outre une surface périphérique (30) qui est appropriée pour rendre le piston (1) étanche par rapport à la surface interne (20) d'un cylindre (2) et sur laquelle on applique, soit directement, soit via une couche intermédiaire (32) un revêtement DLC (31), **caractérisé en ce que**, sur base de la réduction du composant polaire de l'énergie superficielle, le revêtement DLC (31) contient entre 5 et 25 % de fluor par rapport au poids total dudit revêtement (31).

2. Segment de piston (3, 3', 3") selon la revendication 1, dans lequel la teneur en fluor dudit revêtement DLC (31) représente de 5 à 20 % par rapport au poids total dudit revêtement (31).

3. Piston (1) pour une machine à pistons, ledit piston pouvant venir s'insérer, avec un jeu suffisant, dans un cylindre (2) d'une machine à pistons et étant équipé sur sa surface périphérique (10) d'au moins une rainure (11, 11',11") qui s'étend sur toute la circonférence dudit piston (1) et dans laquelle est inséré un segment de piston (3, 3', 3"), qui est appropriée pour rendre le piston (1) étanche par rapport à la surface interne (20) du cylindre (2) de chaque machine à pistons, **caractérisé en ce que** ledit piston comprend au moins un segment de piston (3, 3', 3") selon la revendication 1 ou 2.

4. Piston (1) pour une machine à pistons, ledit piston pouvant venir s'insérer, avec un jeu suffisant, dans un cylindre (2) d'une machine à pistons et étant équipé sur sa surface périphérique (10) d'au moins une rainure (11, 11',11") qui s'étend sur toute la circonférence dudit piston (1) et dans laquelle est inséré un segment de piston (3, 3', 3"), qui est appropriée rendre le piston (1) étanche par rapport à la surface interne (20) du cylindre (2) de chaque machine à pistons, **caractérisé en ce que** ledit piston est équipé d'un revêtement DLC (31) qui, sur base de la réduction du composant polaire de l'énergie superficielle, contient entre 5 et 25 % de fluor par rapport au poids total dudit revêtement (31) et est disponible sur au moins la partie d'une zone de sa surface périphérique (10) qui est orientée vers la paroi interne (20) du cylindre (2) et disposée à l'extérieur des rainures (11, 11',11") qui sont destinées à recevoir chaque segment de piston (3, 3', 3").

5. Piston (1) selon la revendication 4, dans lequel la teneur en fluor dudit revêtement DLC (31) représente de 5 à 20 % par rapport au poids total dudit revêtement (31).

6. Piston (1) selon la revendication 4, **caractérisé en ce qu'**il comprend au moins un segment de piston (3, 3', 3") selon la revendication 1 ou 2.

7. Machine à pistons, comprenant au moins un cylindre (2) dans lequel est inséré au moins un piston (1) selon l'une quelconque des revendications 3 à 6, ledit piston étant équipé d'au moins un segment de piston (3, 3', 3") selon la revendication 1 ou 2.

8. Machine à pistons selon la revendication 7, plus précisément machine à pistons d'entraînement, qui est choisie parmi le groupe constitué par des moteurs à essence à combustion interne comprenant un ou plusieurs cylindres, des moteurs diesel à combustion interne comprenant un ou plusieurs cylindres, et des moteurs à combustion interne comprenant un ou plusieurs cylindres, dans lesquels on utilise n'importe quel autre carburant fossile ou carburant de synthèse à base d'hydrocarbures.

9. Machine à pistons selon la revendication 7, plus précisément machine à pistons menés, qui est choisie parmi le groupe constitué par des pompes à pistons et des compresseurs à pistons.
